# EUROPEAN PATENT APPLICATION

(11) **EP 2 224 661 A1**
(43) Date of publication of application: **01.09.2010**
(21) Application number: 08868480.8
(22) Date of filing: 18.12.2008
(51) Int. Cl.: H04L 29/06

(54) **A METHOD, SYSTEM AND APPARATUS OF AFFAIR CONTROL**

(30) Priority: 21.12.2007 CN 200710301955
(71) Applicant: Huawei Technologies Co., Ltd., Longgang District, Shenzhen Guangdong 518129 (CN)
(72) Inventor: XIANG, Hai, Shenzhen Guangdong 518129 (CN); YI, Zhiquan, Shenzhen Guangdong 518129 (CN); DING, Ning, Shenzhen Guangdong 518129 (CN); LU, Jianfeng, Shenzhen Guangdong 518129 (CN)
(74) Representative: Gleiter, Hermann
(86) International application number: PCT/CN2008/073585
(87) International publication number: WO 2009/082938

(57) **Abstract**

A method, system and apparatus for controlling affairs are disclosed. The method includes: receiving, by a service end, a request message from a terminal; resolving, by the service end, the request message; and when an operation command in the request message is a data modification operation command, obtaining, according to data modification operation command, an affair type corresponding to the data modification operation command; and performing an operation, by the service end according to the obtained data modification operation command and affair type. Through adding a corresponding affair type in the request message sent by the terminal, the service end may identify the affair type requested by the terminal and conduct appropriate processing. Therefore, the service end may perform affair control on XCAP batch processing according to specific application requirements of the terminal, thereby enhancing practicality and flexibility of the XCAP signaling and terminal user experience.

## Description

### Field of the Invention

Embodiments of the present disclosure relates to communication technologies, and in particular to a method, system and apparatus for controlling affairs.

### Background

Internet Engineering Task Force (IETF) has formulated XML Configuration Access Protocol (XCAP), which supports a client's writing, reading and modifying application configuration data of extensible Markup Language (XML) format stored in a server. The XCAP maps a node of XML document to a Universal Resource Identifier (URI) of Hyper Text Transfer Protocol (HTTP). Therefore these components may be accessed via the HTTP.

Open Mobile Alliance (OMA) XCAP standard signalings such as PUT, GET, and DELETE are operations on a single document or a single node. A request is an operation on the database. In other words, as for a standard XCAP signaling, the database executes an operation and submits a result. Therefore, the existing XCAP signalings do not need affair control parameters, and XML Document Management Servers (XDMS) do not need affair control. However, for the XCAP batch processing sigalings, affair type of XDMS documents operation is not stipulated, and accordingly the XCAP batch processing signalings may be either processed as a database affair or processed as multiple database affairs, which is indefinite for a terminal.

During the implementation of embodiments of the present invention, the inventor finds that there at least exist following problems in the prior art: because the terminals and service ends are not able to reach an agreement on the affair processing mechanism, the service ends are not perfect with respect to the affair processing mechanism and experience of the terminals is uncertain. For example, in the case where the terminal intends to request the service end to perform multi-affair processing for its multiple continuous requests, the requests may be processed as a single affair by default because the service end may not know that requests from the terminal are multi-affair processing. However, if the service end processes the requests as the multi-affair but the terminal intends single affair processing and fails to notify the service end of its intention, unnecessary data will be written. Further, if there is any incorrect data in the requests, operations will not be performed successfully.

### Summary of the Invention

Various embodiments of the present invention provide a method, system and apparatus for controlling affairs, so as to solve the problem in the prior art that: the terminals and service ends are not able to reach an agreement on the affair processing mechanism so that the service end may not learn the affair type requested by a terminal, which results in the inconsistency of the operations executed by the service end and those requested by the terminal.

In view of this, one embodiment of the present invention provides a method for controlling affairs. The method includes: receiving, by a service end, a request message from a terminal; resolving, by the service end, the request message; and when an operation command in the request message is a data modification operation command, obtaining, according to the data modification operation command, an affair type corresponding to the data modification operation command; and performing an operation, by the service end according to the obtained data modification operation command and affair type.

One embodiment of the present invention provides a system for controlling affairs. The system includes: a service end and at least one terminal. The at least one terminal is configured to send a request message to the service end. The service end is configured to receive and resolve the request message sent by the terminal; and when an operation command in the request message is a data modification operation command, obtain according to the data modification operation command an affair type requested by the terminal and carried in the request message; and perform an operation according to the obtained data modification operation command and affair type.

One embodiment of the present invention provides a service end, including: a request receiving module, a judging module, and an affair processing module.

The request receiving module is configured to receive a request message sent by a terminal.

The judging module is configured to resolve the request message received by the request receiving module, and notify the affair processing module when an operation command in the request message is a data modification operation command.

The affair processing module is configured to obtain according to the data modification operation command an affair type corresponding to the data modification operation command; and perform an operation according to the obtained data modification operation command and affair type.

One embodiment of the present invention provides a terminal, including: a request sending module, configured to send a request message to a service end, where the request message carries an affair type requested by the terminal.

Compared with the prior art, in the embodiments of the present invention, through adding a corresponding affair type in the request message sent by the terminal, the service end may identify the affair type requested by the terminal and conduct appropriate processing. Therefore, the service end may perform affair control on XCAP batch processing according to specific application requirements of the terminal. With respect to batch data ADD operations, multi-affair type may be selected so as to filter the illegal data. As for the batch processing operations that need maintaining affair consistency, single affair type may be selected so that practicality and flexibility of the XCAP signaling may be enhanced and terminal user experience may be improved.

### Brief Description of Drawings

Figure 1 is a flow chart illustrating a method for controlling affairs according to one embodiment of the present invention;

Figure 2 is a flow chart illustrating a method for controlling affairs according to another embodiment of the present invention;

Figure 3 is a flow chart illustrating a method for controlling affairs according to another embodiment of the present invention;

Figure 4 is a flow chart illustrating a method for controlling affairs according to another embodiment of the present invention; and

Figure 5 is a structural chart illustrating a system for controlling affairs according to one embodiment of the present invention.

### Detailed Description of Embodiments

A detailed description of various embodiments of the present invention is given as follows by referring to the accompanying drawings and exemplary embodiments.

In the embodiments of the present invention, through adding a corresponding affair type in the request message sent by the terminal, the service end may identify the affair type requested by the terminal and conduct appropriate processing. Therefore, the service end may perform affair control on XCAP batch processing according to specific application requirements of the terminal. With respect to batch data ADD operations, multi-affair type may be selected, one ADD operation is performed as one database affair and one operation result is recorded. Therefore, for data ADD operations, each ADD operation is not affected by other ADD operations, so that the illegal data may be filtered. However, if one operation command contains some illegal data, the operation will be failed, which only affects that operation and other operations will not be affected. For example, suppose an attribute is numeric and defined in a range of 0 to 9, if an input parameter of the data contains any of *a*-*z* or other characters, the data may not be written normally. In this case if the single affair type is employed, other operations may be prohibited due to the unwritten data. Accordingly, with multi-affair type the illegal data may effectively be filtered during batch adding data. For batch processing operations that need maintaining a ffair consistency, the single affair type may be selected to perform operations.

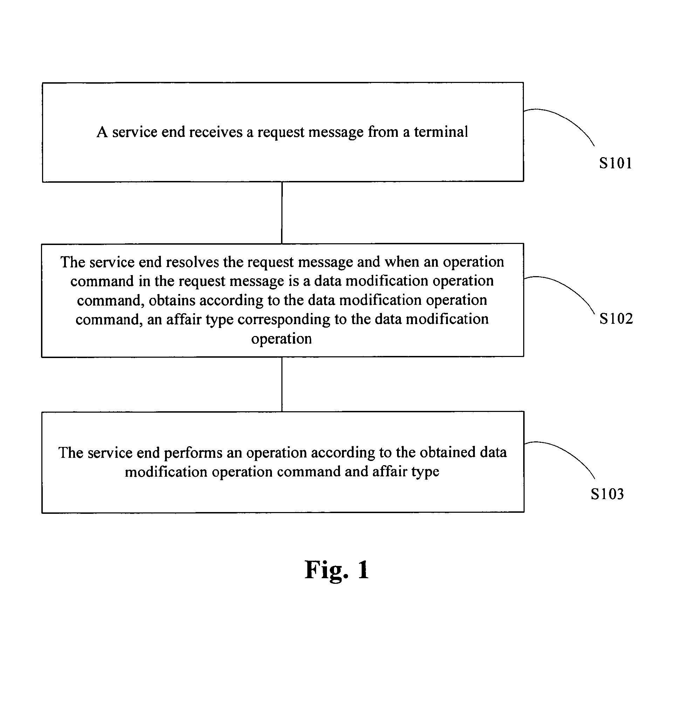

Referring to Figure 1, it is a flow chart illustrating a method for controlling affairs. The method includes as follows.

Step S 101: A service end receives a request message from a terminal.

Step S102: The service end resolves the request message, and obtains an affair type corresponding to a data modification operation command according to the data modification operation command when the operation command carried in the request message is the data modification operation command.

Step S103: The service end performs an operation according to the obtained data modification operation command and affair type.

Therefore, according to this embodiment, the service end may perform affair control on XCAP batch processing according to specific application requirements of the terminal. With respect to batch data ADD operations, multi-affair type may be selected so as to filter illegal data. As for the batch processing operations that need maintaining affair consistency, single affair type may be selected so that practicality and flexibility of the XCAP signaling may be enhanced and terminal user experience may be improved.

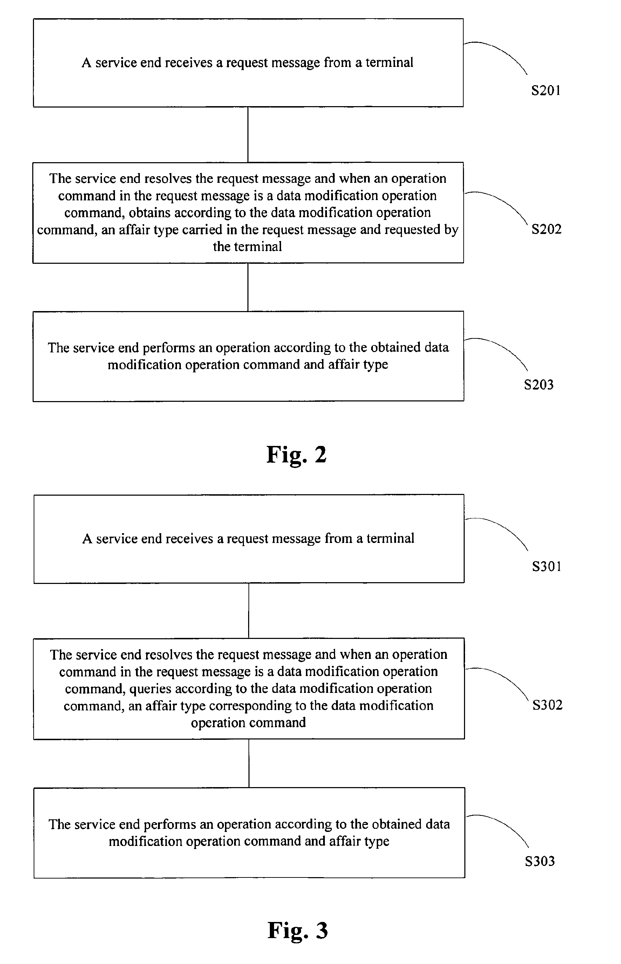

Referring to Figure 2, it is a flow chart illustrating a method for controlling affairs according to another embodiment of the present invention. On the basis of the above embodiment, in this embodiment an affair type requested by a terminal, carried in a request message and corresponding to a data modification operation command is obtained according to the data modification operation command. The embodiment includes steps as follows.

Step S201: The service end receives the request message from the terminal.

Step S202: The service end resolves the request message, and obtains the affair type requested by the terminal and carried in the request message according to the data modification operation command, when the operation command in the request message is the data modification operation command.

Step S203: The service end performs an operation according to the obtained data modification operation command and affair type.

According to this embodiment, the service end may perform affair control on XCAP batch processing according to specific application requirements of the terminal. With respect to batch data ADD operations, multi-affair type may be selected so as to filter the illegal data. As for the batch processing operations that need maintaining affair consistency, single affair type may be selected so that practicality and flexibility of the XCAP signaling may be enhanced and terminal user experience may be improved.

Referring to Figure 3, it is a flow chart illustrating a method for controlling affairs according to another embodiment of the present invention. It is different from the foregoing embodiment in that in this embodiment, a data modification operation command is obtained and the affair type corresponding to the data modification operation command is queried according to the obtained data modification operation command. The embodiment includes steps as follows.

Step S301: The service end receives the request message from the terminal.

Step S301: The service end resolves the request message, obtains the data modification operation command, and queries the affair type corresponding to the data modification operation command according to the data modification operation command.

Step S303: The service end performs an operation according to the obtained data modification operation command and affair type.

According to this embodiment, the service end may perform affair control on XCAP batch processing according to specific application requirements of the terminal. With respect to batch data ADD operations, multi-affair type may be selected so as to filter the illegal data. As for the batch processing operations that need maintaining affair consistency, single affair type may be selected so that practicality and flexibility of the XCAP signaling may be enhanced and terminal user experience may be improved.

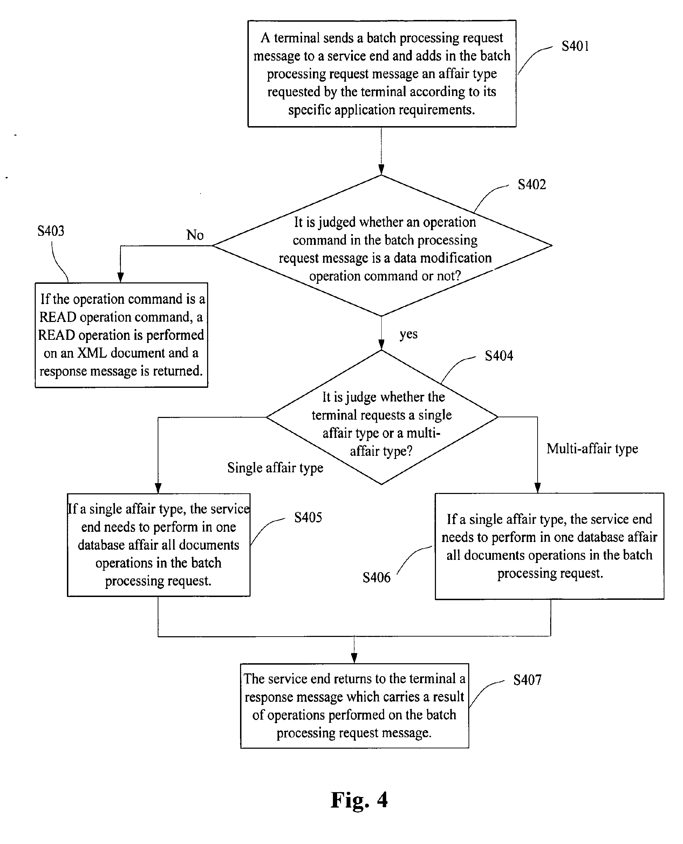

Referring to Figure 4, it is a flow chart illustrating a method for controlling affairs according to one embodiment of the present invention. For example, a request message sent by a terminal to a service end is taken as a batch processing request message, and the method includes steps as follows.

Step S401: The terminal sends the batch processing request message to the service end, and add the affair type requested by the terminal in the batch processing request message according to the specific application requirement. According to this embodiment, an affair type attribute, for example, affair Type, is added in the outer layer label, for example, List label, of the batch processing request message body, and the affair type is reflected by the value of the affair type attribute. For example, the value SINGLE_AFFAIR indicates a single affair type and the value MULTI_AFFAIR indicates a multi-affair type. For example:

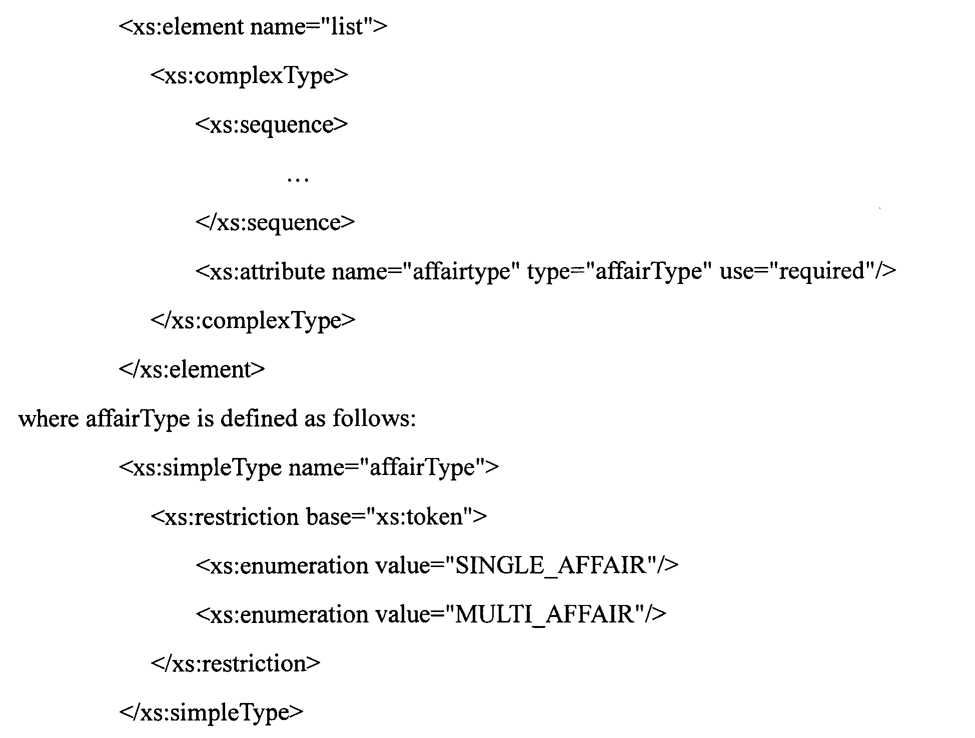

The single affair type refers to that the service end performs in a database affair all the operation commands carried in the batch processing request message. Any failed database operation causes a re-processing of the whole affair. The result of the single affair processing is: all successful, or all failed. In other words, one mistake of a operation command causes failure of operation of the batch processing request message, which is beneficial to the batch processing operation maintaining affair consistency. The multi-affair type refers to that the service end performs each operation command carried in the batch processing request message as one database affair. The service end treats each database operation as one independent affair and records the operation result. Any failed database operation only causes a rollback of current affair and does not affect other database operation commands in the batch processing request message. As a result, with respect to multi-affair processing, a response message may indicate some successful operations or some failed operations, which is quite normal.

For a better understanding of the foregoing embodiment, taking operations of ADD and MODIFY as example and supposing the operations are conducted as multi-affair type, the request message is as follows:

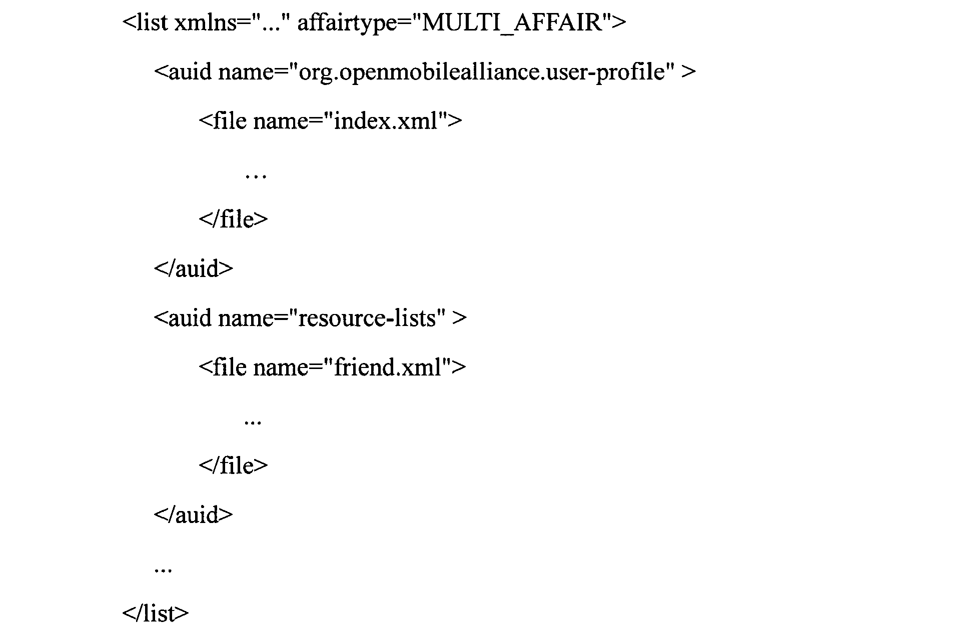

It should be noted that, adding an affair type attribute in the outer layer label of the batch processing request message body is just an exemplary implementation of the embodiment; the affair type may be carried in the batch processing request message by adding a corresponding attribute in a label similar to the outer layer label of the batch processing message or adding a new parameter. Therefore, the alternatives regarding how to add the affair type in the batch processing request message are covered by the protection scope of the present invention.

Step S402: The service end receives and resolves the batch processing request message sent by the terminal, and judges whether the operation command in the batch processing request message is a data modification operation command. As a preferred solution of this embodiment, there is no need to process a READ operation command according to the affair processing procedure because there is no problem regarding affair consistency. Only when the operation command is a data modification operation command, such as ADD, DELETE or MODIFY, affair operation is performed on the batch processing request of the terminal.

Step S403: If the operation command in the batch processing request message is a READ command, a READ operation is performed on the XML document. After this operation, the service end returns a response message to the terminal, where the response message carries a result of the READ operation performed by the service end.

Step S404: If the operation command in the batch processing request message is a data modification operation command, such as ADD, DELETE or MODIFY command, it is determined whether the affair type requested by the terminal is single affair type or multi-affair type.

Step S405: If the terminal requests a single affair type, the service end needs to complete in a database affair all document operations in the batch processing request, such as batch add, and modify or delete document or nodes in the document. Any failed database operation causes a rollback to the whole affair. The result may be: all successful or all failed.

Step S406: If the terminal requests a multi-affair type, the service end processes each document operation in the batch processing request as an independent affair. When operating multiple nodes of one document, the service end constructs an SQL sentence for performing to ensure the operation of one document is single affair. Therefore, the result of any database operation does not affect other database operations.

Step S407: After the service end processes the batch processing request in steps S405 and S406, the service end returns a response message carrying operation result of the batch processing; for example, success or failure. According to this embodiment, 500 in the response message represents failure of modification and 200 represents success of modification.

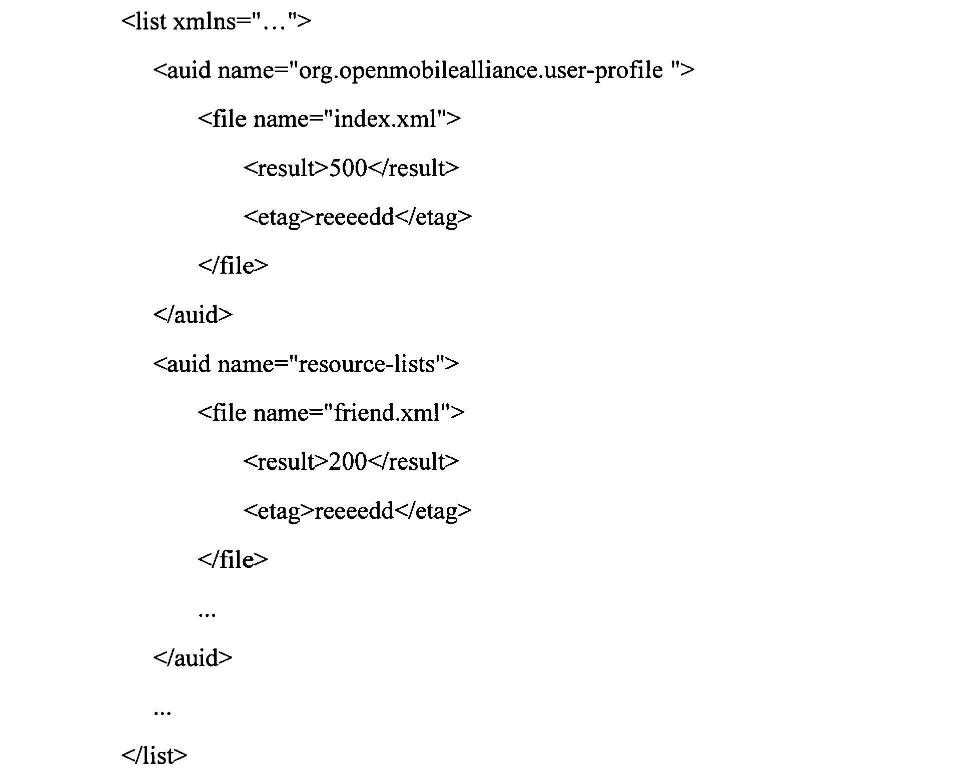

In the foregoing embodiment, sending the affair type by a terminal is a preferred implementation, the batch processing affair type of a service operation may be configured via configuration files or database at the service end side. The affair type is loaded when the service end boots up and after the batch processing request is received, data operations are performed according to the stipulated affair processing mode and a response is returned. Specifically, the service end receives a batch processing request from the terminal; resolves the batch processing request to obtain a corresponding data modification operation command and queries the corresponding affair type according to the data modification operation command; and performs an operation according to the data modification operation command and affair type.

In the above mode, although the affair type is not carried in the batch processing request sent from a terminal, the XDMS stipulates the affair type of the service operation in the manner of configuration. Such stipulation is essentially made by a service side and does not change the procedure that the XDMS differentiates the affair types to perform batch data processing, which should be covered in the protection scope of the embodiments of the present invention.

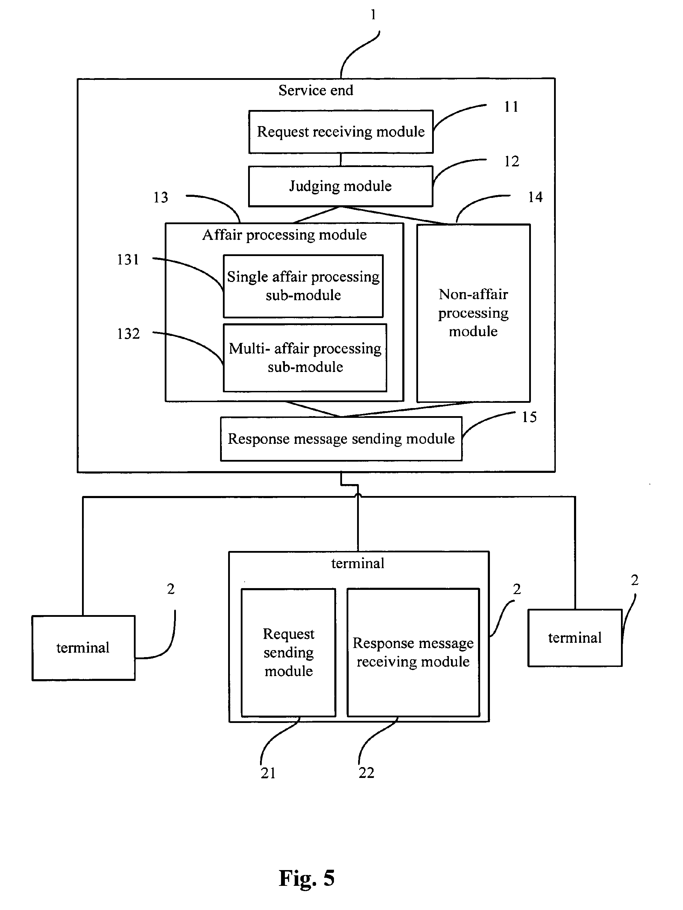

Figure 5 is a structural chart illustrating a system for controlling affairs according to one embodiment of the present invention. The system includes a service end 1 and at least one terminal 2. The terminal 2 is configured to send a request message to the service end 1, which may be a batch processing request message and carry the affair type requested by the terminal 2. The service end 1 is configured to receive and resolve the request message from the terminal 2, to obtain a corresponding data modification operation command and affair type, and perform an operation according to the data modification operation command and affair type.

The service end 1 includes a request receiving module 11, a judging module 12 and an affair processing module 13. The request receiving module 11 is configured to receive the request message sent by the terminal 2. The judging module 12 is configured to resolve the request message received by the request receiving module 11 and judge whether the operation command in the request message is a data modification operation command or not. The affair processing module 13 is configured to obtain an affair type corresponding to the data modification operation command according to the data modification operation command when the judging module 12 judges that the operation command in the request message is a data modification operation command; and perform an operation according to the obtained data modification operation command and affair type.

The affair processing module 13 is specifically configured to obtain an affair type carried in the request message, requested by a terminal and corresponding to the data modification operation command, according to the data modification operation command.

The affair processing module 13 is further configured to obtain a corresponding data modification operation command, and query according to the data modification operation command an affair type corresponding to the data modification operation command.

The service end 1 further includes a non-affair processing module 14, configured to perform corresponding operations, for example, a READ operation, on an XML document when the judging module 12 judges that the operation command in the request message is not a data modification operation command, such as READ.

The affair processing module 13 includes a single affair processing sub-module 131 and a multi-affair processing sub-module 132. The single affair processing sub-module 131 is configured to perform in a database affair all data operations in the data modification operation command when the affair type is single affair type. The multi-affair processing sub-module 132 is configured to perform each data operation in the data modification operation command as a single database affair when the affair type is multi-affair type.

The service end 1 further includes a response message sending module 15, configured to return a response message to the terminal 2 after the affair processing module 13 completes the operation. The response message carries an operation result of the request message.

The terminal 2 includes a request sending module 21 and a response receiving module 22. The request sending module 21 is configured to send the request message to the service end 1, which carries the affair type requested by the terminal 2. The response receiving module 22 is configured to receive the response message returned by the service end 1, which carries the operation result of the request message.

In the embodiments of the present invention, through adding a corresponding affair type in the request message sent by the terminal, the service end may identify the affair type requested by the terminal and conduct appropriate processing. Therefore, the service end may perform affair control on XCAP batch processing according to specific application requirements of the terminal. Therefore, the service end may perform affair control on XCAP batch processing according to specific application requirements of the terminal. With respect to batch data adding operations, multi-affair type may be selected so as to filter illegal data. As for the batch processing operations that need maintaining affair consistency, single affair type may be selected so that practicality and flexibility of the XCAP signaling may be enhanced and terminal user experience may be improved.

From the above description of the embodiments, it should be readily recognized by persons skilled in the art that: besides implementation of the present invention through hardware, the present invention may also be implemented through software and necessary universal hardware platform; technical schemes of the present invention may be embodied in software products which may be stored in a non volatile storage medium such as CD-ROM, U disk or moveable hard disk and includes commands for instructing a computer device such as PC, server or network device, to execute methods disclosed in various embodiments of the present invention.

The above are only exemplary embodiments of the present invention and are not intended to limit the protection scope of the invention. Any modifications, equivalents and improvements within the principle and spirit of the invention shall be covered in the protection scope of the present invention.

## Claims

1. A method for controlling affairs, comprising:
receiving, by a service end, a request message from a terminal;
resolving, by the service end, the request message; and when an operation command in the request message is a data modification operation command, obtaining an affair type corresponding to the data modification operation command according to the data modification operation command; and
performing an operation, by the service end, according to the obtained data modification operation command and the affair type.

2. The method according to claim 1, wherein the obtaining an affair type corresponding to the data modification operation command according to the data modification operation command comprises:
obtaining, according to the data modification operation command, the affair type requested by the terminal, carried in the request message and corresponding to the data modification operation command.

3. The method according to claim 1 or 2, wherein the data modification operation command comprises: an ADD operation command, a DELETE operation command or a MODIFY operation command.

4. The method according to claim 2, wherein the obtaining the affair type requested by the terminal and carried in the request message comprises:
obtaining an affair type attribute carried in the outer layer label of the request message body, and obtaining the affair type requested by the terminal through the value of the affair type attribute.

5. The method according to claim 1 or 4, wherein the affair type comprises: a single affair type and a multi-affair type, wherein
the single affair type refers to: performing in a database affair, by the service end, all operation commands in the request message;
the multi-affair type refers to: performing, by the service end, each operation command in the request message as one database affair.

6. The method according to claim 1, further comprising:
returning, by the service end, a response message carrying a result of the performing the operation according to the obtained data modification operation command and the affair type.

7. The method according to claim 1, wherein the obtaining the affair type corresponding to the data modification operation command according to the data modification operation command comprises:
obtaining a corresponding data modification operation command, and querying the affair type corresponding to the data modification operation command according to the data modification operation command.

8. A system for controlling affairs, comprising: a service end and at least one terminal, wherein
the at least one terminal is configured to send a request message to the service end;
and
the service end is configured to receive and resolve the request message sent by the terminal; and when an operation command in the request message is a data modification operation command, obtain an affair type requested by the terminal and carried in the request message according to the data modification operation command; and perform an operation according to the data modification operation command and the obtained affair type.

9. A service end, comprising: a request receiving module; a judging module; and an affair processing module; wherein
the request receiving module is configured to receive a request message sent by a terminal;
the judging module is configured to resolve the request message received by the request receiving module, and notify the affair processing module when an operation command in the request message is a data modification operation command; and
the affair processing module is configured to obtain an affair type corresponding to the data modification operation command according to the data modification operation command; and perform an operation according to the obtained data modification operation command and affair type.

10. The service end according to claim 9, wherein the affair processing module is further configured to obtain according to the data modification operation command, the affair type requested by the terminal, carried in the request message and corresponding to the data modification operation command.

11. The service end according to claim 9, wherein the affair processing module is further configured to obtain the corresponding data modification operation command and query the affair type corresponding to data modification operation command according to the data modification operation command.

12. The service end according to claim 9, further comprising: a non-affair processing module, configured to perform a read operation on an extensible Markup Language, XML, document when the judging module judges that the operation command in the request message is not a data modification operation command.

13. The service end according to claim 9, wherein the affair processing module comprises:
a single affair processing module, configured to perform in a database affair all database operations in the data modification operation command when the obtained affair type is a single affair type; and
a multi-affair processing module, configured to perform each data operation in the data modification operation command as a database affair when the obtained affair type is a multi-affair type.

14. The service end according to claim 9, further comprising: a response message sending module, configured to return a response message to the terminal upon the completion of the operation of the affair processing module, the response message carrying an operation result of the affair processing module.

15. A terminal, comprising: a request sending module, configured to send a request message to a service end, the request message carrying an affair type requested by the terminal.

16. The terminal according to claim 15, further comprising: a response message receiving module, configured to receive a response message returned from the service end, the response message carrying an operation result of the request message.
